Europäisches Patentamt

European Patent Office

Office européen des brevets

(19)

(11) Veröffentlichungsnummer: **0 229 893**
**B1**

(12) # EUROPÄISCHE PATENTSCHRIFT

(45) Veröffentlichungstag der Patentschrift:
**24.01.90**

(21) Anmeldenummer: **86114718.9**

(22) Anmeldetag: **23.10.86**

(51) Int. Cl.⁴: **B01D 46/42**

(54) Anzeigevorrichtung für den Verschmutzungsgrad von Ansaugluftfiltern.

(30) Priorität: **17.12.85 DE 3544492**

(43) Veröffentlichungstag der Anmeldung:
**29.07.87 Patentblatt 87/31**

(45) Bekanntmachung des Hinweises auf die Patenterteilung:
**24.01.90 Patentblatt 90/4**

(84) Benannte Vertragsstaaten:
**AT DE ES FR GB SE**

(56) Entgegenhaltungen:
**DE-A- 1 648 364**
**DE-A- 2 617 972**
**US-A- 4 445 456**

(73) Patentinhaber: **FILTERWERK MANN & HUMMEL GMBH,**
**Hindenburgstrasse 37, D-7140 Ludwigsburg(DE)**

(72) Erfinder: **Müller, Heinz Erwin, Lerchenbergstrasse 13,**
**D-7251 Weissach 2(DE)**

**Beschreibung**

Die Erfindung bezieht sich auf eine Anzeigevorrichtung für den Verschmutzungsgrad von Ansaugluftfiltern mit einer hinter einem Sichtfenster drehbar angeordneten Anzeigescheibe, die in Abhängigkeit von der Druckdifferenz vor und hinter dem Filter bewegbar ist.

Derartige Anzeigevorrichtungen sollen einen unkomplizierten und robusten Aufbau bei ausreichender Anzeigegenauigkeit aufweisen und bei geschlossener Bauweise zudem ein möglichst geringes Bauvolumen haben. Sie können beispielsweise in den Gehäusedeckel von Ansaugluftfiltern eingebaut werden.

Bei der Anzeigevorrichtung der DE-OS 16 48 364 liegen die Kammer, in der der Anzeigedruck herrscht, sowie die zur Betätigung des Kolbens vorgesehene Membran außerhalb des Gehäuses der Anzeigevorrichtung. Es besteht die Gefahr, daß die ungeschützte Membran beim Transport oder beim Einbau beschädigt wird und die Anzeigevorrichtung dann nicht mehr funktionsfähig ist. Erhöhte Sorgfalt und damit erhöhter Aufwand sind notwendig. Auch meldet die Anzeigescheibe in nachteiliger Weise grundsätzlich nur den augenblicklichen Wert des Differenzdrucks vor und hinter dem Filter und dreht sich bei abgeschalteter Maschine immer in ihre Ruhestellung zurück. Dadurch kann das Erreichen oder Überschreiten des gerade noch zulässigen Verschmutzungsgrades nicht rechtzeitig bemerkt werden.

Ausgehend von der bekannten Anzeigevorrichtung besteht die Aufgabe der Erfindung darin, eine kompakt gestaltete und in der Funktion verbesserte Vorrichtung zu schaffen. Erfindungsgemäß ist dies mit den im Kennzeichen des Anspruchs 1 aufgeführten Merkmalen erreicht.

Sämtliche funktionswichtigen Bauteile der Anzeigevorrichtung sind nunmehr in einem geschlossenen Gehäuse untergebracht und vor Beschädigungen geschützt. Auch bleibt die Anzeige des Verschmutzungsgrades nach Erreichen oder Überschreiten des zulässigen Grenzwertes bei abgeschalteter Maschine immer erhalten. So ist gewährleistet, daß selbst ein nur kurzzeitiges Überschreiten des Grenzwertes sicher bemerkt wird.

In Ausgestaltung der Erfindung ist der erste Hebelarm durch von den Flanschen parallel zur Kolbenachse in die Anzeigekammer vorstehende Ansätze gebildet, wobei der eine Ansatz den Rastvorsprung und der andere Ansatz einen sich im wesentlichen achsparallel zur Schwenkachse der Wippe erstreckenden Antriebsbolzen trägt. Begünstigt durch die Ausbildung des Winkelhebels als Wippe läßt sich mit einer solchen Gestaltung eine gedrängte Bauform der Anzeigevorrichtung bei übersichtlicher Anordnung und einfacher Montage der Einzelteile erreichen.

Vorteilhaft ist zum Andrücken der Sperrklinke an den Rastvorsprung eine in einer Widerlagerkappe angeordnete Rastfeder vorgesehen, die an einem an der Achse der Sperrklinke festgelegten Schwenkhebel anliegt. Dadurch wird eine einwandfreie Einrastung sichergestellt.

Das Rückstellen der Anzeige, beispielsweise nach dem Austausch des verschmutzten Filtereinsatzes, ist dadurch ermöglicht, daß ein den Deckel außermittig durchsetzender Rückstellknopf entgegen der Kraft einer Vorholfeder und der Rastfeder gegen die Sperrklinke zur Erzeugung eines das Ausrasten der Sperrklinke bewirkenden Drehmoments andrückbar ist. Dadurch kann auch ein Rückstellen erfolgen, ohne daß der Gehäusedeckel des Ansaugluftfilters abgenommen werden muß.

Eine einfache Bauform der Vorrichtung zum Rückstellen der Verschmutzungsanzeige bei gleichzeitig verminderter Reibung ergibt sich dadurch, daß die Vorholfeder durch zwei diametral am Rückstellknopf befestigte Blattfedern gebildet ist, die mit ihren freien Enden unter Vorspannung gegen eine Querwand der Einsatzhülse anliegen.

Bei einer Anzeigevorrichtung mit wenigstens einem axial in die Anzeigekammer hineinragenden festen Anschlag für die Begrenzung der Drehbewegung der Anzeigescheibe und einem an der Anzeigescheibe angeordneten Anschlagglied ist nach einem weiteren Vorschlag der Erfindung das Anschlagglied an die dem Deckel abgewandte Stirnseite der Anzeigescheibe einstückig angeformt.

Nachfolgend wird ein Ausführungsbeispiel der Erfindung anhand der Zeichnungen näher erläutert. Es zeigen

Figur 1 eine Anzeigevorrichtung der Erfindung, teils in Ansicht, teils im Schnitt,

Figur 2 die Anzeigevorrichtung der Figur 1 in Draufsicht,

Figur 3 einen Schnitt nach der Linie 3 - 3 der Figur 1,

Figur 4 einen Ausschnitt der Anzeigevorrichtung, teils in Ansicht, teils im Schnitt, mit der Vorrichtung in der Ruhestellung,

Figur 5 einen Schnitt nach der Linie 5 - 5 der Figur 3,

Figur 6 einen Schnitt nach der Linie 6 - 6 der Figur 3 und

Figur 7 einen Ausschnitt der Anzeigevorrichtung, teils in Ansicht, teils im Schnitt, mit der Vorrichtung in der Anzeigestellung.

Die Anzeigevorrichtung 10 für den Verschmutzungsgrad von Ansaugluftfiltern hat ein topfförmiges Gehäuse 11. Der Gehäuseboden 12 weist eine Anschlußöffnung 13 zur Verbindung mit dem Reinluftraum eines nicht dargestellten Ansaugluftfilters auf. An der oberen offenen Stirnseite 14 ist das Gehäuse 11 durch einen Deckel 15 aus durchsichtigem Kunststoff verschlossen. Zur Bildung der fünf sektorförmigen Sichtfenster 16 ist eine Stirnfläche des Deckels 15 in bekannter Weise z. B. mit einer entsprechend gestalteten undurchsichtigen Folie o. dgl. belegt. Gehäuse 11 und Deckel sind über eine Rast- oder Schweißverbindung aneinander befestigt. Um eine bestimmte Winkelstellung des Deckels 15 gegenüber dem Gehäuse 11 zu erreichen, greift eine am Innenumfang des Gehäuses 11 sich achsparallel erstreckende Feder 17 in eine gleichfalls achsparallel angeordnete Nut 18 des Deckels 15 ein.

Im Gehäuse 11 ist eine Einsatzhülse 29 festgelegt. Die Feder 17 greift auch in eine Längsnut 30 am Außenumfang der Einsatzhülse 29 ein. Die Einsatzhülse 29 drückt mit der unteren Stirnseite von Ringrippenabschnitten 31 den ver dickten Außenrand 22 einer ringförmigen Membran 21 gegen einen Absatz 23 der Gehäusewand 20 abgedichtet an. Am Innenumfang ist die Membran 21 mit einem Kolben 25 dicht verbunden, der das Innere des Gehäuses 11 in eine dem Gehäuseboden 12 benachbarte Unterdruckkammer 45 und in eine Anzeigekammer 46 unterteilt.

In der Anzeigekammer 46 ist ein als U-förmige Wippe 47 ausgebildeter Winkelhebel mit den Lagerzapfen 51 und 52 seiner Schwenkachse in Ausnehmungen 32 der Einsatzhülse 29 außerhalb der Kolbenachse 26 und quer zu ihr angeordnet, Die Wippe 47 weist Flansche 48 bzw. 49 auf, die mit den Lagerzapfen 51 bzw. 52 verbunden sind, und hat einen Steg 50, der sich parallel zur Schwenkachse der Wippe 47 erstreckt. Von dem Flansch 48 steht ein Ansatz 54 und vom Flansch 49 ein Ansatz 55 parallel zur Kolbenachse 26 in die Anzeigekammer 46 vor. Die Ansätze 54 und 55 bilden den ersten Hebelarm 53 und die Flansche 48 und 49 den zweiten Hebelarm 60 der Wippe 47.

Der Ansatz 54 hat an seiner außenliegenden Seitenfläche einen mit Abstand zur Schwenkachse angeordneten Rastvorsprung 56. Der Ansatz 55 trägt an seiner Oberseite einen Antriebsbolzen 57, der sich achsparallel zur Schwenkachse der Wippe 47 erstreckt. Der zweite Hebelarm 60 hat an der der Kolbenstirnseite 27 zugewandten Unterseite einen Vorsprung 61, über den der Kolben 25 auf den zweiten Hebelarm 60 der Wippe 47 einwirkt.

Eine als Schenkelfeder ausgebildete und nur verhältnismäßig geringe Kräfte aufweisende Rückholfeder 64 ist in eine an die Einsatzhülse 29 angeformte Aufnahme 33 eingesetzt. Dabei stützt sich das Ende ihres ersten Schenkels 65 seitlich gegen eine Erhebung 34 am Quersteg 35 der Einsatzhülse 29 ab. Das Ende des zu einer Schleife gebogenen zweiten Schenkels 66 der Rückholfeder 64 liegt am Mitnehmerzapfen 71 einer Anzeigescheibe 70 an. Die Aufgabe der Rückholfeder 64 besteht darin, den zweiten Hebelarm 60 der Wippe 47 in ständigem Kontakt mit der Stirnseite 27 des Kolbens 25 zu halten.

Die Anzeigescheibe 70 weist fünf sektorförmige Flügel 72 sowie ein Anschlagglied 73 auf, das an die dem Deckel 15 abgewandte Stirnseite der Anzeigescheibe 70 einstückig angeformt ist. Sie ist mit einer Spindel 74 achsparallel zur Kolbenachse 26 in einer Lagerbuchse 36 der Einsatzhülse 29 drehbar gelagert.

Eine gegenüber der Rückholfeder 64 verhältnismäßig kräftige, als Schraubendruckfeder ausgebildete Rückstellfeder 67 stützt sich mit der ersten Stirnseite 68 am Kolben 25 und mit der zweiten Stirnseite 69 am Gehäuseboden 12 ab.

Die Einsatzhülse 29 hat zwei Lager 37 zur Aufnahme der Enden der Achse 91 einer Sperrklinke 90. Die Lager 37 sind zum Absatz 23 der Gehäusewand 20 hin offen. An den Absatz 23 angeformte Rippen 28 fixieren die Achse 91 schwenkbar am Grund der Lager 37. Die Sperrklinke 90 liegt mit dem gekrümmten Ende 92 ihres Klinkenarmes 93 am Rastvorsprung 56 der Wippe 47 an. Das gekrümmte Ende 92 geht in eine Rastvertiefung 94 über. An seinem anderen Ende weist der Klinkenarm 93 eine Verlängerung 95 zur seitlichen Führung der Sperrklinke 90 in einem Schlitz 39 der Einsatzhülse 29 auf. Ferner hat die Sperrklinke 90 einen an ihrer Achse 91 festgelegten Schwenkhebel 96. Eine Rastfeder 97 ist mit einem Ende an einem Nocken 98 des Schwenkhebels 96 zentriert und liegt mit dem anderen Ende am Boden 41 einer von einer Querwand 40 der Einsatzhülse 29 nach oben vorragenden Widerlagerkappe 42 an.

Ein Rückstellknopf 105 durchsetzt eine abgestufte, außermittige Bohrung 19 im Deckel 15. Die Bewegung des Rückstellknopfes 105 nach außen wird durch eine Schulter 106 begrenzt. An seinem inneren Ende ist der Rückstellknopf 105 mit einer aus zwei Blattfedern 107 bestehenden Vorholfeder 108 versehen, die mit ihren freien Enden 109 unter Vorspannung gegen die Querwand 40 der Einsatzhülse 29 anliegt. Zur Führung des Rückstellknopfes 105 dient ein an der Querwand 40 befestigter Bolzen 110, der in eine Längsbohrung 111 des Rückstellknopfes 105 eingreift. Ferner weist der Rückstellknopf 105 einen mit ihm fest verbundenen Ausrasthebel 112 auf, der bei Betätigung des Rückstellknopfes mit einem Vorsprung 113 gegen den Klinkenarm 93 der Sperrklinke 90 drückt und ein das Ausrasten der Sperrklinke bewirkendes Drehmoment erzeugt.

Beim Ausführungsbeispiel besteht der Deckel 15 aus transparentem Kunststoff, wobei die Bereiche außerhalb der Sichtfenster 16 undurchsichtig gemacht wurden. Alle übrigen Teile, mit Ausnahme der Rückholfeder 64, der Rückstellfeder 67 und der Rastfeder 97, die aus Stahl gefertigt sind, sowie der aus elastischem Gummi hergestellten Membran 21, bestehen aus undurchsichtigem Kunststoff.

Die beispielsweise im Gehäusedeckel eines Ansaugluftfilters eingebaute Anzeigevorrichtung 10 ist im praktischen Betrieb mit ihrer Anschlußöffnung 13 an den Reinluftraum des Ansaugluftfilters angeschlossen. Der dort auftretende Unterdruck hängt vom Luftdurchsatz und vom Verschmutzungsgrad des Filtereinsatzes ab.

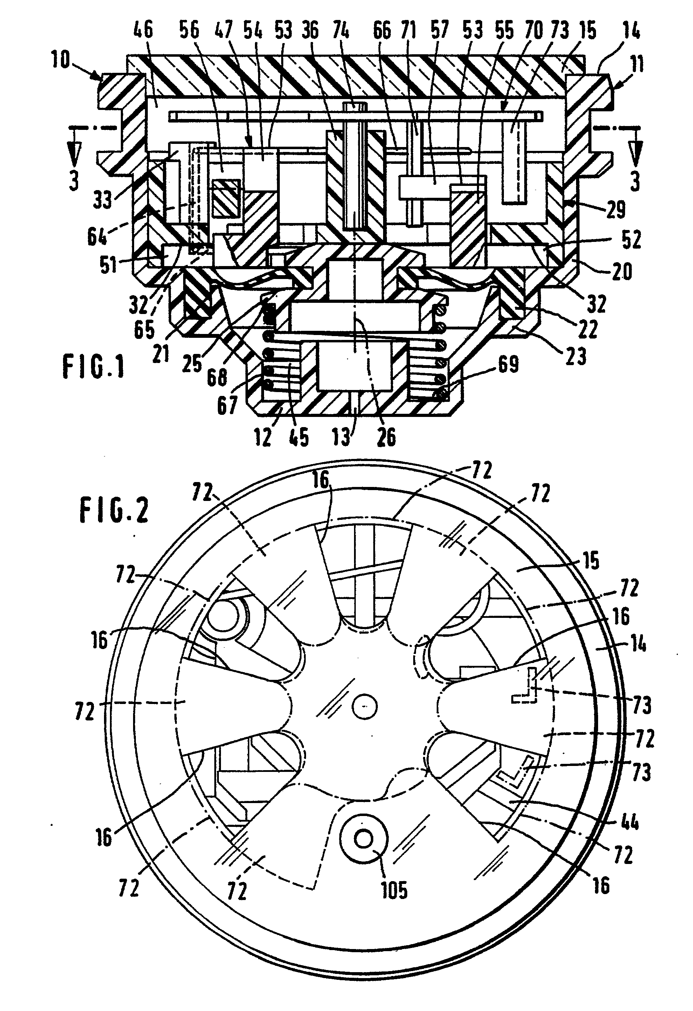

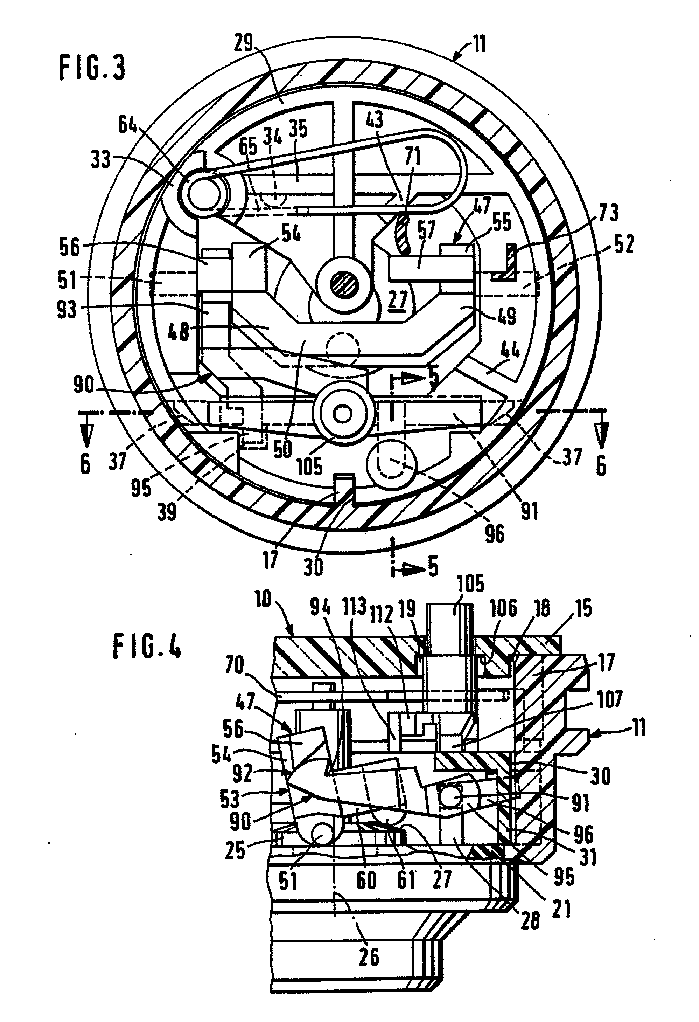

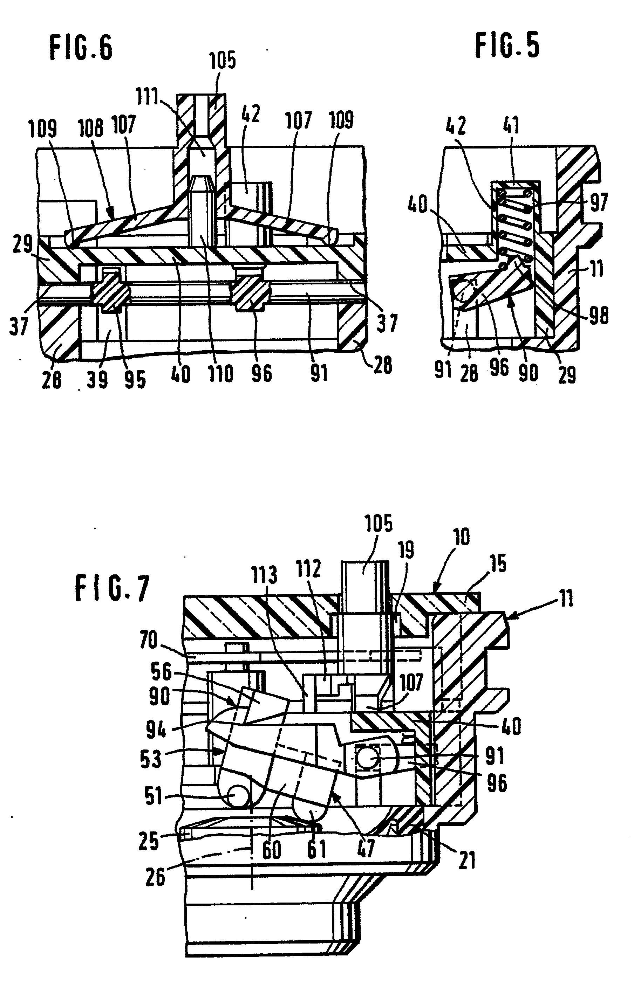

Die Anzeigevorrichtung 10 ist in den Figuren 1 bis 6 in ihrer Ruhestellung, in Figur 2 strichpunktiert sowie in Figur 7 in der Anzeigestellung dargestellt. In der Ruhestellung stützt sich der Mitnehmerzapfen 71 an einem einstückig mit dem Quersteg 35 der Einsatzhülse 29 verbundenen Anschlag 43 ab (siehe Figur 3).

Mit steigendem Unterdruck im Reinluftraum des Ansaugluftfilters infolge zunehmender Verschmutzung des Filtereinsatzes bewegt sich der Kolben 25 gegen die Kraft der Rückstellfeder 67 auf den Gehäuseboden 12 zu. Durch die mit ihrem zweiten Schenkel 66 an dem Mitnehmerzapfen 71 der Anzeigescheibe 70 angreifende Rückholfeder 64 steht die Wippe 47 über den Antriebsbolzen 57 ihres ersten Hebelarms 53 und den Vorsprung 61 ihres zweiten Hebelarms 60 in ständigem Kontakt mit der Stirnseite 27 des Kolbens 25. Die Bewegung des Kolbens 25 wird dadurch auf die Anzeigescheibe 70 übertragen, die sich entsprechend der Kolbenbewegung dreht. Dabei gelangen die beispielsweise rot gefärbten Flügel 72 der Anzeigescheibe 70 zunehmend in den Bereich der Sichtfenster 16 im Deckel 15.

Während der Schwenkbewegung der Wippe 47 gleitet gleichzeitig der Rastvorsprung 56 auf der Stirnfläche des gekrümmten Endes 92 der Sperrklinke 90, die durch die Rastfeder 97 in ständiger Berührung mit dem Rastvorsprung 56 gehalten wird. Bei nachlassendem Unterdruck kehren die beweglichen Teile wieder in die Ruhestellung zurück.

Erreicht oder überschreitet der Unterdruck schließlich den zulässigen Wert, so greift die Sperrklinke 90 mit ihrer Rastvertiefung 94 hinter den Rastvorsprung 56 der Wippe 47 (siehe Figur 7) und verhindert eine Rückbewegung der Wippe und damit der Anzeigescheibe 70. In der Anzeigestellung, die in Figur 2 stricnpunktiert dargestellt ist, sind die Flügel 72 der Anzeigescheibe 70 vollständig in den Bereich der Sichtfenster 16 im Deckel 15 gelangt. Eine von der Einsatzhülse 29 axial in die Anzeigekammer 46 hineinragende Anschlagnase 44 begrenzt im Zusammenwirken mit dem Anschlagglied 73 die weitere Drehbewegung der Anzeigescheibe 70.

Will man, beispielsweise nach Austausch des verschmutzten Filtereinsatzes, die Anzeigevorrichtung 10 wieder in die Ruhestellung zurückbewegen, so ist hierzu ein Druck auf den Rückstellknopf 105 erforderlich. Beim Einwärtsdrücken des Rückstellknopfes 105 wird der Ausrasthebel 112 ebenfalls nach unten auf den Klinkenarm 93 der Sperrklinke 90 zu bewegt und schwenkt diese schließlich vom Rastvorsprung 56 der Wippe 47 weg. Diese Teile stehen dann nicht mehr in Eingriff miteinander. Die Rückstellfeder 67 schwenkt daraufhin die Wippe 47 so weit zurück, bis die Anzeigescheibe 70 die Ruhestellung erreicht hat, bei der der Mitnehmerzapfen 71 an dem Anschlag 43 anliegt.

**Patentansprüche**

1. Anzeigevorrichtung (10) für den Verschmutzungsgrad von Ansaugluftfiltern mit einem topfförmigen Gehäuse (11), das an der offenen Stirnseite (14) durch einen Sichtfenster (16) aufweisenden Deckel (15) verschlossen ist, mit einem durch eine Membran (21) gegenüber der Gehäusewand (20) abgedichteten Kolben (25), der durch die Druckdifferenz vor und hinter dem Filter gegen die Kraft einer Rückstellfeder (67) aus einer Ruhestellung in eine Anzeigestellung bewegbar ist, sowie mit einem Winkelhebel in einer Anzeigekammer (46) zur Übertragung der Kolbenbewegung auf eine hinter den Sichtfenstern (16) drehbare, achsparallel zur Kolbenachse (26) gelagerte Anzeigescheibe (70), wobei der Winkelhebel mit seiner Schwenkachse quer zur Kolbenachse (26) angeordnet und über Lagerzapfen (51), 52) in einer im Gehäuse festgelegten Einsatzhülse (29) schwenkbar befestigt ist und wobei sein erster Hebelarm (53) auf die Anzeigescheibe (70) einwirkt und sein zweiter Hebelarm (60) durch eine Rückholfeder (64) in jeder Betriebsstellung zur Anlage an der ihm zugewandten Stirnseite (27) des Kolbens gebracht ist, dadurch gekennzeichnet, daß der Kolben (25) das Innere des Gehäuses (11) in eine dem Gehäuseboden (12) benachbarte, eine Anschlußöffnung (13) zur Verbindung mit dem Reinluftraum des Ansaugluftfilters aufweisende Unterdruckkammer (45) und die Anzeigekammer (46) unterteilt, und daß der Winkelhebel als U-förmige Wippe (47) ausgebildet ist, die einen sich parallel zu ihrer Schwenkachse erstreckenden Steg (50) und zwei mit den Lagerzapfen (51, 52) verbundene, den zweiten Hebelarm (60) bildende Flansche (48, 49) sowie einen mit Abstand zur Schwenkachse angeordneten Rastvorsprung (56) aufweist, und daß eine achsparallel zur Schwenkachse der Wippe (47) in der Einsatzhülse (29) schwenkbar gelagerte Sperrklinke (90) vorgesehen ist, die zur Verhinderung der Rückbewegung der Wippe (47) aus der Anzeigestellung in die Ruhestellung hinter den Rastvorsprung (56) greift.

2. Anzeigevorrichtung nach Anspruch 1, dadurch gekennzeichnet, daß der erste Hebelarm (53) durch von den Flanschen (48, 49) parallel zur Kolbenachse (26) in die Anzeigekammer (46) vorstehende Ansätze (54, 55) gebildet ist, wobei der eine Ansatz (54) den Rastvorsprung (56) und der andere Ansatz (55) einen sich im wesentlichen achsparallel zur Schwenkachse der Wippe (47) erstreckenden Antriebsbolzen (57) trägt.

3. Anzeigevorrichtung nach Anspruch 1 und 2, dadurch gekennzeichnet, daß zum Andrücken der Sperrklinke (90) an den Rastvorsprung (56) eine in einer Widerlagerkappe (42) angeordnete Rastfeder (97) vorgesehen ist, die an einem an der Achse (91) der Sperrklinke (90) festgelegten Schwenkhebel (96) anliegt.

4. Anzeigevorrichtung nach Anspruch 1 bis 3, dadurch gekennzeichnet, daß ein den Deckel (15) außermittig durchsetzender Rückstellknopf (105) entgegen der Kraft einer Vorholfeder (108) und der Rastfeder (97) gegen die Sperrklinke (90) zur Erzeugung eines das Ausrasten der Sperrklinke (90) bewirkenden Drehmoments andrückbar ist.

5. Anzeigevorrichtung nach Anspruch 4, dadurch gekennzeichnet, daß die Vorholfeder (108) durch zwei diametral am Rückstellknopf (105) befestigte Blattfedern (107) gebildet ist, die mit ihren freien Enden (109) unter Vorspannung gegen eine Querwand (40) der Einsatzhülse (29) anliegen.

6. Anzeigevorrichtung nach einem der Ansprüche 1 bis 5 mit wenigstens einem axial in die Anzeigekammer hineinragenden festen Anschlag für die Begrenzung der Drehbewegung der Anzeigescheibe und einem an der Anzeigescheibe angeordneten Anschlagglied, dadurch gekennzeichnet, daß das Anschlagglied (73) an die dem Deckel (15) abgewandte Stirnseite der Anzeigescheibe (70) einstückig angeformt ist.

**Claims**

1. Indicating apparatus (10) for indicating the degree of dirt in suction air filters, including a cup-shaped housing (11), which is sealed at the open end face (14) by a cover (15) provided with viewing windows (16), a piston (25) which is sealed from the housing wall (20) by a diaphragm (21) and is displaceable from a position of rest to an indicating position in a direction opposite the force of a resetting spring (67) as a result of the difference in pressure in front of and behind the filter, and an angle lever in an indicating chamber (46) for transmitting the piston movement to an indicating disc (70), which is rotatable behind the viewing windows (16) and is mounted in an axis-parallel manner relative to the piston axis (26), wherein the angle lever is disposed with its pivotal axis extending transversely relative to the piston axis (26) and is pivotably mounted, via journals (51; 52), in an insert sleeve (29), which is secured in the housing, and wherein its first lever arm (53) acts on the indicating disc (70), and its second lever arm (60) is brought into abutment with the end face (27) of the piston facing said arm in each operating position by means of a recoil spring (64), characterised in that the piston (25) divides the interior of the housing (11) into a low-pressure vacuum chamber (45), which is situated adjacent to the housing base (12) and is provided with a connecting aperture (13) for connection with the filtered air chamber of the suction air filter, and the indicating chamber (46), and in that the angle lever is a U-shaped rocker (47), which includes a cross-piece member (50) extending parallel to the pivotal axis of said rocker, two flanges (48, 49) which are connected to the journals (51, 52) and form the second lever arm (60), and a notched projection (56) which is spaced from the pivotal axis, and in that a lock pawl (90) is provided, which is pivotably mounted in the insert sleeve (29) in an axis-parallel manner relative to the pivotal axis of the rocker (47) and engages behind the notched projection (56) in order to prevent the rocker (47) moving back from the indicating position to the position of rest.

2. Indicating apparatus according to claim 1, characterised in that the first lever arm (53) is formed by extension members (54, 55), which protrude from the flanges (48, 49) parallel to the piston axis (26) into the indicating chamber (46), wherein one extension member (54) is provided with the notched projection (56), and the other extension member (55) is provided with a driving pin (57), which extends in a substantially axis-parallel manner relative to the pivotal axis of the rocker (47).

3. Indicating apparatus according to claims 1 and 2, characterised in that, in order to press the lock pawl (90) against the notched projection (56), a stop spring (97) is provided which is disposed in an abutment cap (42) an abuts against a pivotal lever (96) secured to the axle (91) of the lock pawl (90).

4. Indicating apparatus according to claims 1 to 3, characterised in that a resetting button (105), which extends eccentrically through the cover (15), can be pressed towards the lock pawl (90) in a direction opposite the force of a counter-recoil spring (108) and the stop spring (97) in order to produce a torque which causes the lock pawl (90) to become disengaged.

5. Indicating apparatus according to claim 4, characterised in that the counter-recoil spring (108) is formed by two plate springs (107), which are mounted diametrically on the resetting button (105) and abut, with their free ends (109), against a transverse wall (40) of the insert sleeve (29), with initial tension being formed thereby.

6. Indicating apparatus according to one of claims 1 to 5, including at least one fixed stop member, which protrudes axially into the indicating chamber, for defining the rotary movement of the indicating disc, and a stop member which is disposed on the indicating disc, characterised in that the stop member (73) is shaped to fit integrally with the end face of the indicating disc (70) remote from the cover (15).

**Revendications**

1. Dispositif indicateur (10) du degré d'encrassement de filtres aspirateurs d'air, avec un corps (11) en forme de pot, qui est fermé sur sa face frontale ouverte (14) par un couvercle (15) présentant une fenêtre de regard (16), par un piston (25) étoupé par une membrane (21) par rapport à la paroi du corps (20), qui peut être déplacé au moyen de la différence de pression devant et derrière le filtre, en s'opposant à la force d'un ressort de rappel (67), d'une position de repos dans une position d'indication avec, en plus, un levier coudé dans une chambre d'indication (46) pour la transmission du mouvement du piston à un disque indicateur (70) monté sur un axe parallèle à l'axe du piston et mobile en rotation derrière les fenêtres de regard (16), sur lequel le levier coudé est disposé avec son axe de pivotement transversalement à l'axe du piston (26) et est fixé de manière articulée au moyen de tourillons (51, 52) dans un manchon (29) maintenu dans le corps, dont le premier bras de levier (53) agit sur le disque indicateur (70) et dont le deuxième bras de levier (60) est amené par un ressort de rappel (64) à l'appui de la face frontale (27) du piston lui faisant face, dans toutes les positions de fonctionnement, caractérisé en ce que le piston (25) divise l'intérieur du corps (11) en une chambre de dépression (45) voisine de la base du corps (12), qui présente une ouverture de communication (13) destinée à la liaison avec la chambre d'air pur du filtre aspirateur d'air et en une chambre d'indication (46), et en ce que le levier coudé est constitué par une bascule (47) en forme d'U, qui présente une traverse (50) s'étendant parallèlement à son axe de pivotement et deux rebords (48, 49) reliés aux tourillons (51, 52) qui constituent le deuxième bras de levier (60), et par une saillie à cran (56) disposée à une certaine distance de l'axe de pivotement et en ce qu'il est prévu un cliquet (90) monté pivotant dans le manchon (29), dont l'axe est parallèle à l'axe de pivotement de la bascule (47) et qui s'engage derrière la saillie à cran (56), afin d'introduire le mouvement de retour de la bascule (47) de la position d'indication dans la position de repos.

2. Dispositif indicateur selon la revendication 1, caractérisé en ce que le premier bras de levier (63) est constitué par des appendices (54, 55) s'avançant parallèlement à l'axe du piston (26) dans la chambre d'indication (46), en ce que l'un des appendices (54) supporte la saillie à cran (56) et l'autre appendice (55) un pivot d'entraînement (57) dont l'axe est sensiblement parallèle à l'axe de pivotement de la bascule (47).

3. Dispositif indicateur selon les revendications 1 et 2, caractérisé en ce qu'il est prévu pour appuyer le cliquet (90) sur la saillie à cran un ressort à cran d'arrêt (97) disposé dans un capuchon de butée, qui s'appuie sur un levier pivotant (96) fixé sur l'axe (91) du cliquet (90).

4. Dispositif indicateur selon les revendications 1 à 3, caractérisé en ce qu'un bouton de rappel (105) traversant excentriquement le couvercle (15) et agissant en sens contraire de la force exercée par un ressort repousseur (108) et le ressort à cran d'arrêt (97) peut être appuyé contre le cliquet (90) pour produire le couple de rotation qui provoque le désencrantage du cliquet (90).

5. Dispositif indicateur selon la revendication 4, caractérisé en ce que le ressort repousseur (108) est constitué par deux ressorts à lame (107) fixés diamétralement sur le bouton de rappel (105) et dont les extrémités libres (109) précontraintes s'appuient contre une paroi transversale (40) du manchon (29).

6. Dispositif indicateur selon l'une des revendications 1 à 5, avec au moins une butée fixe pour la limitation du mouvement du disque indicateur, qui fait saillie dans la chambre d'indication, et un élément de butée disposé sur le disque indicateur, caractérisé en ce que l'élément de butée (73) est façonné d'une seule pièce avec la face frontale opposée au couvercle (15) du disque indicateur (70).

FIG.1

FIG.2

FIG.3

FIG.4

FIG.6

FIG.5

FIG.7